# EUROPEAN PATENT APPLICATION

(11) **EP 4 734 472 A1**
(43) Date of publication of application: **29.04.2026**
(21) Application number: 24842204.0
(22) Date of filing: 04.07.2024
(51) Int. Cl.: H04L 45/00

(54) **INFORMATION PROCESSING METHOD AND APPARATUS**

(30) Priority: 14.07.2023 CN 202310870655
(71) Applicant: Huawei Technologies Co., Ltd., Shenzhen, Guangdong 518129 (CN)
(72) Inventor: ZHANG, Ka, Shenzhen, Guangdong 518129 (CN); LIU, Shuying, Shenzhen, Guangdong 518129 (CN)
(74) Representative: Gill Jennings & Every LLP
(86) International application number: PCT/CN2024/103584
(87) International publication number: WO 2025/016209

(57) **Abstract**

This application discloses an information processing method applied to a controller. The method includes: determining a first SR policy, where the first SR policy includes a first SID of a first network node serving as a head node, and the first SID belongs to a network segment corresponding to a first locator of the first network node; and sending attribute information of the first locator to the first network node, to trigger the first network node to allocate a BSID to the first SR policy from the network segment corresponding to the first locator. In the solution, the controller specifies a locator used by the head node to allocate the BSID to the first SR policy, so that a locator that is of the first network node and that is used by the controller to determine the first SR policy is consistent with the locator used by the first network node to allocate the BSID to the first SR policy. This facilitates network maintenance.

## Description

This application claims priority to Chinese Patent Application No. 202310870655.3, filed with the China National Intellectual Property Administration on July 14, 2023, and entitled "INFORMATION PROCESSING METHOD AND APPARATUS", which is incorporated herein by reference in its entirety.

### TECHNICAL FIELD

This application relates to the communication field, and in particular, to an information processing method and apparatus.

### BACKGROUND

Segment routing (segment routing, SR) is a protocol that is designed based on a source routing idea and that is used to forward a data packet on a network. An SR policy (policy) is an SR-based tunnel traffic diversion technology. The SR policy may include a path from a head node to a destination node. A controller may obtain the path through calculation, and deliver the SR policy including the path to the head node. The path included in the SR policy may be represented as a segment list (segment list), and the segment list may include a plurality of segment identifiers (segment identifiers, SIDs) that are arranged in order.

In some scenarios, the head node of the SR policy may allocate a binding segment identifier (binding SID, BSID) to the SR policy by the controller. Currently, a manner of allocating the BSID by the head node is unfavorable to network maintenance.

Therefore, a solution is urgently needed to resolve the foregoing problem.

### SUMMARY

Embodiments of this application provide an information processing method and apparatus. A controller specifies a locator (locator) used by a head node to allocate a BSID, to facilitate network maintenance.

According to a first aspect, an embodiment of this application provides an information processing method, and the method may be applied to a controller. The controller may determine a first SR policy, where the first SR policy includes a first segment identifier (segment identifier, SID) of a first network node, the first network node is a head node corresponding to the first SR policy, and the first SID belongs to a network segment corresponding to a first locator of the first network node. The controller may further obtain attribute information of the first locator, where the attribute information indicates the first locator, and the controller sends the attribute information of the first locator to the first network node, where the attribute information of the first locator is used to trigger the first network node to allocate a BSID to the first SR policy from the network segment corresponding to the first locator. It may be learned that, in the solution, the controller may send, to a head node of an SR policy, attribute information of a locator (that is, the first locator) that is of the first network node and that is used to determine the first SR policy, so that the first network node allocates the BSID to the first SR policy from the network segment corresponding to the first locator, and the locator that is of the first network node and that is used by the controller to determine the first SR policy is consistent with a locator used by the first network node to allocate the BSID to the first SR policy. This facilitates network maintenance.

According to a second aspect, an embodiment of this application provides an information processing method, and the method may be applied to a controller. The controller may determine a first SR policy, where the first SR policy includes a first SID of a first network node, the first network node is a head node corresponding to the first SR policy, and the first SID belongs to a network segment corresponding to a first locator of the first network node. The controller may further obtain attribute information of the first locator, where the attribute information indicates the first locator, and the controller sends the attribute information of the first locator to the first network node, where the attribute information of the first locator indicates a condition that needs to be satisfied by a locator used by the first network node to allocate a BSID to the first SR policy. It may be learned that, in the solution, the controller may send, to a head node of an SR policy, attribute information of a locator (that is, the first locator) that is of the first network node and that is used to determine the first SR policy, so that the first network node allocates, based on the attribute information, the BSID to the first SR policy from the network segment corresponding to the first locator, and the locator that is of the first network node and that is used by the controller to determine the first SR policy is consistent with the locator used by the first network node to allocate the BSID to the first SR policy. This facilitates network maintenance.

Both the method in the first aspect and the method in the second aspect may have the following possible implementation solutions.

In a possible implementation, the controller may update a second SR policy when a locator of the first network node evolves, to obtain the first SR policy. Both head nodes of the first SR policy and the second SR policy are the first network node. The second SR policy includes a second SID of the first network node, and the second SID belongs to a network segment corresponding to a second locator of the first network node. In other words, a locator used to determine the second SR policy is the second locator. In a specific implementation, the controller may receive locator evolution indication information. The locator evolution indication information indicates that the locator of the first network node evolves from the second locator to the first locator. After receiving the locator evolution indication information, the controller may update the second SR policy in response to the evolution indication information, to obtain the first SR policy. In the scenario, in the solution, a locator that is of the first network node and that is used by the controller to determine the first SR policy is consistent with the locator used by the first network node to allocate the BSID to the first SR policy. This facilitates recycling of the second locator.

In a possible implementation, it is considered that a prefix of the first locator may be used to identify the first locator, and the first locator may be determined, based on the prefix of the first locator, from a plurality of locators corresponding to the first network node. Therefore, the attribute information of the first locator may be the prefix of the first locator.

In a possible implementation, it is considered that when a network node has a plurality of locators, the plurality of locators may have corresponding priorities Therefore, when the locator corresponding to the first network node has a priority, a priority of the first locator may be used to identify the first locator, and the first locator may be determined, based on the priority of the first locator, from a plurality of locators corresponding to the first network node. Therefore, the attribute information of the first locator may be the priority of the first locator.

In a possible implementation, it is considered that when a network node has a plurality of locators, the plurality of locators may be associated with flexible algorithms (flexible algorithms, flex-algo). For example, different locators are associated with different flexible algorithms. Therefore, when the locator corresponding to the first network node is associated with a flexible algorithm, a flexible algorithm associated with the first locator may be used to identify the first locator, and the first locator may be determined, based on the flexible algorithm associated with the first locator, from a plurality of locators corresponding to the first network node. Therefore, the attribute information of the first locator may be the flexible algorithm associated with the first locator.

In a possible implementation, during specific implementation of sending the attribute information of the first locator to the first network node, the controller may send a border gateway protocol (Border Gateway Protocol, BGP) SR policy message to the first network node, where the BGP SR policy message includes the attribute information of the first locator. In this case, the first network node may parse the BGP SR policy message to obtain the attribute information of the first locator, so that the first network node allocates the BSID to the first SR policy from the network segment corresponding to the first locator.

In a possible implementation, the BGP SR policy message may include a first type length value (type length value, TLV), and the first TLV is used to carry the attribute information of the first locator. In this case, the first network node may parse the first TLV in the BGP SR policy message to obtain the attribute information of the first locator.

In a possible implementation, during specific implementation of sending the attribute information of the first locator to the first network node, the controller may send a path computation element protocol (Path Computing Unit Protocol, PCEP) message to the first network node, where the PCEP message includes the attribute information of the first locator. In this case, the first network node may parse the PCEP message to obtain the attribute information of the first locator, so that the first network node allocates the BSID to the first SR policy from the network segment corresponding to the first locator.

In a possible implementation, the PCEP message may include a second TLV, and the second TLV is used to carry the attribute information of the first locator. In this case, the first network node may parse the second TLV in the PCEP message to obtain the attribute information of the first locator.

In a possible implementation, after allocating a first BSID to the first SR policy from the network segment corresponding to the first locator, the first network node may report the first BSID to the controller. Correspondingly, the controller may receive the first BSID reported by the first network node. Further, the controller may associate the first BSID with the first SR policy. For example, the controller may store a correspondence between the first BSID and the first SR policy.

In a possible implementation, in addition to sending the first BSID to the controller, the first network node may further send the attribute information of the first locator to the controller, so that the controller verifies the first BSID based on the attribute information of the first locator, for example, verifies whether the first BSID belongs to the network segment corresponding to the first locator. Correspondingly, in addition to receiving the first BSID sent by the first network node, the controller may further receive the attribute information of the first locator sent by the first network node.

In a possible implementation, the first network node may include the first BSID and the attribute information of the first locator in a same message and send the same message to the controller. For example, the first network node may send a BGP link state (link state, LS) message to the controller, where the BGP LS message includes the first BSID and the attribute information of the first locator. In this case, the controller may obtain the first BSID and the attribute information of the first locator by using the BGP LS message.

In a possible implementation, the first locator is determined by the controller. In a specific example, after determining the first SR policy, the controller may further determine a locator to which the first SID belongs, in other words, determine the first locator based on the first SID. In another specific example, before determining the first SR policy, the controller may determine, from at least one locator of the first network node, the first locator used to determine the first SR policy, and further determine the first SR policy by using the first SID in the network segment corresponding to the first locator.

According to a third aspect, an embodiment of this application provides an information processing method, and the method may be applied to a first network node, where the first network node is a head node corresponding to a first SR policy. The first SR policy includes a first SID of the first network node, the first SID belongs to a network segment corresponding to a first locator, and the first locator is a locator of the first network node. The first network node may receive attribute information of the first locator sent by a controller, where the attribute information indicates the first locator, and the attribute information of the first locator is used to trigger the first network node to allocate a BSID to the first SR policy from the network segment corresponding to the first locator. After receiving the attribute information of the first locator sent by the controller, the first network node may allocate, to the first SR policy based on the attribute information of the first locator, a first BSID belonging to the network segment. It may be learned that, in the solution, the controller may send, to a head node of an SR policy, attribute information of a locator (that is, the first locator) that is of the first network node and that is used to determine the first SR policy, so that the first network node allocates the BSID to the first SR policy from the network segment corresponding to the first locator, and the locator that is of the first network node and that is used by the controller to determine the first SR policy is consistent with a locator used by the first network node to allocate the BSID to the first SR policy. This facilitates network maintenance.

According to a fourth aspect, an embodiment of this application provides an information processing method, and the method may be applied to a first network node, where the first network node is a head node corresponding to a first SR policy. The first SR policy includes a first SID of the first network node, the first SID belongs to a network segment corresponding to a first locator, and the first locator is a locator of the first network node. The first network node may receive attribute information of the first locator sent by a controller, where the attribute information indicates the first locator, and the attribute information of the first locator indicates a condition that needs to be satisfied by a locator used by the first network node to allocate a BSID to the first SR policy. After receiving the attribute information of the first locator sent by the controller, the first network node may allocate a first BSID to the first SR policy from the network segment based on the attribute information of the first locator. It may be learned that, in the solution, the controller may send, to a head node of an SR policy, attribute information of a locator (that is, the first locator) that is of the first network node and that is used to determine the first SR policy, so that the first network node allocates the BSID to the first SR policy from the network segment corresponding to the first locator, and the locator that is of the first network node and that is used by the controller to determine the first SR policy is consistent with the locator used by the first network node to allocate the BSID to the first SR policy. This facilitates network maintenance.

Both the method in the third aspect and the method in the fourth aspect may have the following possible implementation solutions.

In a possible implementation, the attribute information of the first locator includes a prefix of the first locator, a priority of the first locator, or a flexible algorithm associated with the first locator.

In a possible implementation, the receiving the attribute information of the first locator sent by the controller includes: receiving a border gateway protocol BGP SR policy message sent by the controller, where the BGP SR policy message includes the attribute information of the first locator.

In a possible implementation, the BGP SR policy message includes a first type length value TLV, and the first TLV carries the attribute information of the first locator.

In a possible implementation, the receiving the attribute information of the first locator sent by the controller includes: receiving a path computation element protocol PCEP message sent by the controller, where the PCEP message includes the attribute information of the first locator.

In a possible implementation, the PCEP message includes a second TLV, and the second TLV carries the attribute information of the first locator.

In a possible implementation, if the attribute information of the first locator is the prefix of the first locator, the first network node may determine the first locator based on the prefix, and further allocate a first BSID to the first SR policy from the network segment corresponding to the first locator.

In a possible implementation, if the attribute information of the first locator is the priority of the first locator, the first network node may determine, based on the priority of the first locator, the first locator from a plurality of locators corresponding to the first network node. For example, the first network node may locally store a first mapping relationship between the plurality of locators of the first network node and priorities respectively corresponding to the locators. The first network node may query the first mapping relationship based on the priority of the first locator as an index, to obtain a mapping relationship between the first locator and the priority of the first locator, and further determine the first locator based on the mapping relationship between the first locator and the priority of the first locator. After determining the first locator, the first network node may further allocate a first BSID to the first SR policy from the network segment corresponding to the first locator.

In a possible implementation, if the attribute information of the first locator is the flexible algorithm associated with the first locator, the first network node may determine, based on the flexible algorithm associated with the first locator, the first locator from a plurality of locators corresponding to the first network node. For example, the first network node may locally store a second mapping relationship between the plurality of locators of the first network node and flexible algorithms respectively associated with the locators. The first network node may query the second mapping relationship based on the flexible algorithm associated with the first locator as an index, to obtain a mapping relationship between the first locator and the flexible algorithm associated with the first locator, and further determine the first locator based on the mapping relationship between the first locator and the flexible algorithm associated with the first locator. After determining the first locator, the first network node may further allocate a first BSID to the first SR policy from the network segment corresponding to the first locator.

In a possible implementation, the method further includes: sending the first BSID to the controller.

In a possible implementation, the sending the first BSID to the controller includes: sending the first BSID and the attribute information of the first locator to the controller.

In a possible implementation, the sending the first BSID and the attribute information of the first locator to the controller includes: sending a BGP link state LS message to the controller, where the BGP LS message includes the first BSID and the attribute information of the first locator.

According to a fifth aspect, an embodiment of this application provides an information processing apparatus, and the apparatus is used in a controller. The apparatus includes: a processing unit, configured to determine a first segment routing policy SR policy, where the first SR policy includes a first segment identifier SID of a first network node, the first network node is a head node corresponding to the first SR policy, and the first SID belongs to a network segment corresponding to a first locator of the first network node; and obtain attribute information of the first locator, where the attribute information indicates the first locator; and a sending unit, configured to send the attribute information of the first locator to the first network node. In an example, the attribute information of the first locator is used to trigger the first network node to allocate a binding segment identifier BSID to the first SR policy from the network segment corresponding to the first locator. In another example, the attribute information of the first locator indicates a condition that needs to be satisfied by a locator used by the first network node to allocate the BSID to the first SR policy.

In a possible implementation, the attribute information of the first locator includes a prefix of the first locator, a priority of the first locator, or a flexible algorithm associated with the first locator.

In a possible implementation, the sending unit is configured to send a border gateway protocol BGP SR policy message to the first network node, where the BGP SR policy message includes the attribute information of the first locator.

In a possible implementation, the BGP SR policy message includes a first type length value TLV, and the first TLV carries the attribute information of the first locator.

In a possible implementation, the sending unit is configured to send a path computation element protocol PCEP message to the first network node, where the PCEP message includes the attribute information of the first locator.

In a possible implementation, the PCEP message includes a second TLV, and the second TLV carries the attribute information of the first locator.

In a possible implementation, the apparatus further includes a receiving unit, configured to receive a first BSID that corresponds to the first SR policy and that is sent by the first network node, where the first BSID belongs to the network segment corresponding to the first locator.

In a possible implementation, the receiving unit is configured to receive the first BSID and the attribute information of the first locator that are sent by the first network node.

In a possible implementation, the receiving unit is configured to receive a BGP link state LS message sent by the first network node, where the BGP LS message includes the first BSID and the attribute information of the first locator.

In a possible implementation, the first locator is determined by the controller.

In a possible implementation, the processing unit is configured to update a second SR policy in response to receiving locator evolution indication information, to obtain the first SR policy, where the locator evolution indication information indicates that a locator of the first network node evolves from a second locator to the first locator, the second SR policy includes a second SID of the first network node, the first network node is a head node corresponding to the second SR policy, and the second SID belongs to a network segment corresponding to the second locator.

According to a sixth aspect, an embodiment of this application provides an information processing apparatus, and the apparatus is used in a first network node. The apparatus includes: a receiving unit, configured to receive attribute information of a first locator sent by a controller, where the attribute information indicates the first locator, and the first locator is a locator of the first network node. In an example, the attribute information of the first locator is used to trigger the first network node to allocate a binding segment identifier BSID to a first SR policy from a network segment corresponding to the first locator. In another example, the attribute information of the first locator indicates a condition that needs to be satisfied by a locator used by the first network node to allocate the BSID to the first SR policy. The first SR policy includes a first segment identifier SID of the first network node, the first SID belongs to the network segment, and the first network node is a head node corresponding to the first SR policy. A processing unit is configured to allocate, to the first SR policy based on the attribute information of the first locator, a first BSID belonging to the network segment.

In a possible implementation, the attribute information of the first locator includes a prefix of the first locator, a priority of the first locator, or a flexible algorithm associated with the first locator.

In a possible implementation, the receiving unit is configured to receive a border gateway protocol BGP SR policy message sent by the controller, where the BGP SR policy message includes the attribute information of the first locator.

In a possible implementation, the BGP SR policy message includes a first type length value TLV, and the first TLV carries the attribute information of the first locator.

In a possible implementation, the receiving unit is configured to receive a path computation element protocol PCEP message sent by the controller, where the PCEP message includes the attribute information of the first locator.

In a possible implementation, the PCEP message includes a second TLV, and the second TLV carries the attribute information of the first locator.

In a possible implementation, the processing unit is configured to determine the first locator based on the prefix of the first locator; and allocate the first BSID to the first SR policy from the network segment corresponding to the first locator.

In a possible implementation, the processing unit is configured to determine, based on the priority of the first locator, the first locator from a plurality of locators corresponding to the first network node; and allocate the first BSID to the first SR policy from the network segment corresponding to the first locator.

In a possible implementation, the processing unit is configured to determine, based on the flexible algorithm associated with the first locator, the first locator from a plurality of locators corresponding to the first network node; and allocate the first BSID to the first SR policy from the network segment corresponding to the first locator.

In a possible implementation, the apparatus further includes a sending unit, configured to send the first BSID to the controller.

In a possible implementation, the sending unit is configured to send the first BSID and the attribute information of the first locator to the controller.

In a possible implementation, the sending unit is configured to send a BGP link state LS message to the controller, where the BGP LS message includes the first BSID and the attribute information of the first locator.

According to a seventh aspect, an embodiment of this application provides a device. The device includes a processor and a memory. The memory is configured to store instructions or a computer program. The processor is configured to execute the instructions or the computer program in the memory, to perform the method in any one of the first aspect, perform the method in any one of the second aspect, perform the method in any one of the third aspect, or perform the method in any one of the fourth aspect.

According to an eighth aspect, an embodiment of this application provides a computer-readable storage medium, including instructions or a computer program. When the instructions or the computer program is run on a computer, the computer is enabled to perform the method in any one of the first aspect, perform the method in any one of the second aspect, perform the method in any one of the third aspect, or perform the method in any one of the fourth aspect.

According to a ninth aspect, an embodiment of this application provides a computer program product including instructions or a computer program. When the instructions or the computer program is run on a computer, the computer is enabled to perform the method in any one of the first aspect, perform the method in any one of the second aspect, perform the method in any one of the third aspect, or perform the method in any one of the fourth aspect.

According to a tenth aspect, an embodiment of this application provides a communication system. The communication system includes:
a controller that performs the method in any one of the first aspect and a first network node that performs the method in any one of the third aspect; or
a controller that performs the method in any one of the third aspect and a first network node that performs the method in any one of the fourth aspect.

### BRIEF DESCRIPTION OF DRAWINGS

To describe the technical solutions in embodiments of this application or the conventional technology more clearly, the following briefly describes accompanying drawings for describing embodiments or the conventional technology. Apparently, the accompanying drawings in the following descriptions show only some embodiments in this application, and a person of ordinary skill in the art may still derive other drawings from these accompanying drawings without creative efforts.
FIG. 1 is a diagram of an example application scenario according to an embodiment of this application;
FIG. 2 is a diagram of signaling interaction of an information processing method according to an embodiment of this application;
FIG. 3a is a diagram of a structure of a first TLV according to an embodiment of this application;
FIG. 3b is a diagram of a structure of another first TLV according to an embodiment of this application;
FIG. 3c is a diagram of a structure of another first TLV according to an embodiment of this application;
FIG. 3d is a diagram of a structure of a second TLV according to an embodiment of this application;
FIG. 3e is a diagram of a structure of another second TLV according to an embodiment of this application;
FIG. 3f is a diagram of a structure of another second TLV according to an embodiment of this application;
FIG. 4 is a diagram of a structure of an information processing apparatus according to an embodiment of this application;
FIG. 5 is a diagram of a structure of another information processing apparatus according to an embodiment of this application; and
FIG. 6 is a diagram of a structure of a device according to an embodiment of this application.

### DESCRIPTION OF EMBODIMENTS

Embodiments of this application provide an information processing method and apparatus. A controller specifies a locator used by a head node to allocate a BSID, to facilitate network maintenance.

For ease of understanding, possible application scenarios of embodiments of this application are first described.

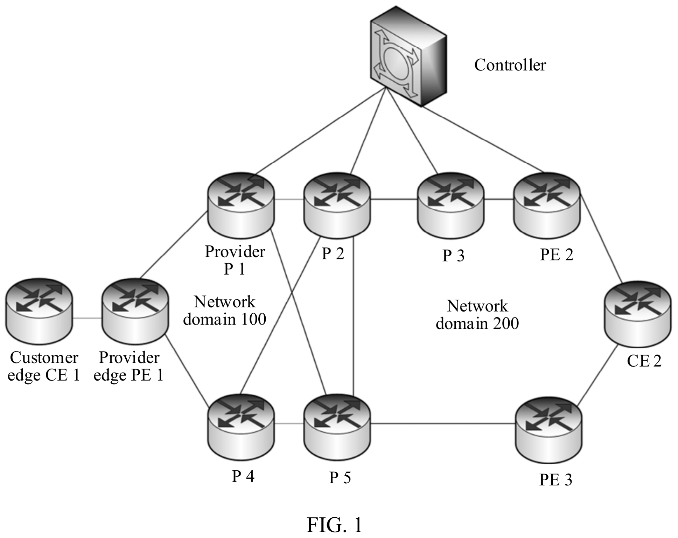

FIG. 1 is a diagram of an example application scenario according to an embodiment of this application.

As shown in FIG. 1, a customer edge (customer edge, CE) 1 and a CE 2 may communicate with each other through a network domain 100 and a network domain 200. The network domain 100 includes a provider edge (provider edge, PE) 1, a provider (provider, P) 1, a P 2, a P 4, and a P 5. The network domain 200 includes the P 2, a P 3, the P 5, a PE 2, and a PE 3. The P 2 and the P 5 are cross-domain nodes between the network domain 100 and the network domain 200.

In an example, a controller may calculate an SR policy, and deliver the SR policy to a head node of the SR policy, and the head node allocates a BSID to the SR policy.

For example, the controller may obtain, through calculation, an SR policy 1 of the P 2 as a head node, and send the SR policy 1 to the P 2, and the P 2 allocates a BSID 1 to the SR policy 1. After allocating the BSID 1 to the SR policy 1, the P 2 may report the BSID 1 to the controller. In an example, the controller may determine, based on the BSID 1, an end-to-end SR policy 2 that is of the PE 1 as a head node and that crosses the network domain 100 and the network domain 200.

For another example, the controller may obtain, through calculation, an SR policy 3 of the PE 1 as a head node, and send the SR policy 3 to the PE 1, and the PE 1 allocates a BSID 2 to the SR policy 3. After allocating the BSID 2 to the SR policy 3, the PE 1 may report the BSID 2 to the controller. In an example, the controller may manage the SR policy 3 based on the BSID 2, for example, may associate a corresponding path management policy based on the BSID 2. The SR policy 3 mentioned herein may cross the network domain 100 and the network domain 200, or may be an SR policy in the network domain 100.

In this embodiment of this application, the SR policy may include a segment list (segment list). The segment list includes at least one SID. The segment list includes a SID of a head node. In other words, the SID of the head node is one of the at least one SID included in the segment list. The SID of the head node may be allocated from a locator corresponding to the head node. Currently, in some scenarios, a plurality of locators may be configured for a network node. When allocating a BSID to an SR policy, a network node serving as a head node may randomly determine a target locator from a plurality of locators corresponding to the network node, and allocate the BSID to the SR policy from the target locator. However, in the manner, there may be a case in which the target locator used to allocate the BSID is inconsistent with a locator used to determine the SR policy. This is unfavorable to network maintenance. The locator used to determine the SR policy is a locator to which a SID used to determine the SR policy belongs.

Descriptions are provided by using an example with reference to the scenario shown in FIG. 1.

It is assumed that the PE 1 includes a locator 1 and a locator 2, a SID 1 belongs to the locator 1, a head node of an SR policy 4 determined by the controller is the PE 1, and the SR policy 4 includes the SID 1. When allocating a BSID to the SR policy 4, the PE 1 allocates a corresponding BSID 3 to the SR policy 4 from a network segment corresponding to the locator 2. However, in the manner, it is unfavorable to network maintenance. For example, in a scenario in which the locator 2 evolves to the locator 1, the controller obtains, through calculation, the SR policy 4 by reusing the SID 1 belonging to the locator 1, but the network node still allocates the corresponding BSID 3 to the SR policy 4 from the network segment corresponding to the locator 2. As a result, the locator 2 cannot be recycled.

To resolve the foregoing problem, embodiments of this application provide an information processing method and apparatus. The following describes the information processing method and apparatus provided in embodiments of this application.

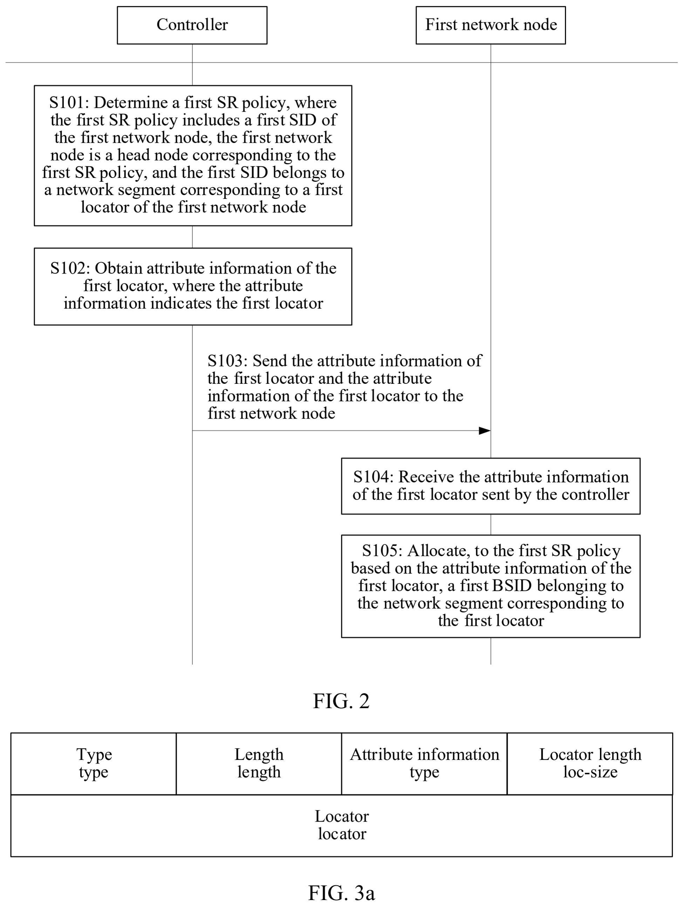

FIG. 2 is a diagram of signaling interaction of an information processing method according to an embodiment of this application. The method shown in FIG. 2 may include the following S101 to S105.

S101: A controller determines a first SR policy, where the first SR policy includes a first SID of a first network node, the first network node is a head node corresponding to the first SR policy, and the first SID belongs to a network segment corresponding to a first locator of the first network node.

In an example, the controller may calculate the first SR policy based on collected network topology information. When calculating an SR policy, the controller may select the first SID to participate in calculation of the first SR policy. Correspondingly, the first SR policy obtained through calculation includes the first SID.

In an example, the controller may calculate the first SR policy for a service in a service deployment phase.

In another example, the controller may update, in real time based on a network topology change, an SR policy obtained through historical calculation, to obtain the first SR policy.

In still another example, the controller may update a second SR policy when a locator of the first network node evolves, to obtain the first SR policy. In a specific implementation, the controller may receive locator evolution indication information. The locator evolution indication information indicates that the locator of the first network node evolves from a second locator to the first locator. After receiving the locator evolution indication information, the controller may update the second SR policy in response to the evolution indication information, to obtain the first SR policy. The second SR policy includes a second SID of the first network node, and the second SID belongs to a network segment corresponding to the second locator. In other words, a locator used to determine the second SR policy is the second locator.

In this embodiment of this application, both head nodes of the first SR policy and the second SR policy are the first network node, and paths indicated by the first SR policy and the second SR policy may be the same or may be different. This is not specifically limited in this embodiment of this application.

A specific implementation in which the controller receives the locator evolution indication information is not specifically limited in this embodiment of this application. In an example, the locator evolution indication information may be sent by the first network node to the controller. In another example, the locator evolution indication information may alternatively be a name entered by a user on the controller.

S102: The controller obtains attribute information of the first locator, where the attribute information indicates the first locator.

In an example, after determining the first SR policy, the controller may further determine a locator to which the first SID belongs, in other words, determine the first locator based on the first SID. In a specific example, the controller may determine, based on pre-collected information of at least one locator of the first network node, the first locator to which the first SID belongs.

In another example, before determining the first SR policy, the controller may alternatively determine, from at least one locator of the first network node, the first locator used to determine the first SR policy, and further determine the first SR policy by using the first SID in the network segment corresponding to the first locator.

In an example, after determining the first SR policy and the first locator, the controller may further obtain the attribute information of the first locator. The attribute information can be used to identify the first locator, or the attribute information can be used to determine the first locator from a plurality of locators corresponding to the first network node.

In an example, it is considered that a prefix of the first locator may be used to identify the first locator, and the first locator may be determined, based on the prefix of the first locator, from the plurality of locators corresponding to the first network node. Therefore, the attribute information of the first locator may be the prefix of the first locator.

For a prefix of a locator, it should be noted that, SR based on an internet protocol version 6 (Internet Protocol version 6, IPv6) data plane is referred to as a segment routing internet protocol version 6 (Segment Routing Internet Protocol Version 6, SRv6). The SRv6 uses a 128-bit IPv6 address as a SID. A SID format includes five parts: an address block (block), a node identifier (node ID), a function identifier (function ID), an argument (argument), and padding (padding).

The block is an address block (address block) used to allocate an SRv6 SID, that is, a common prefix (common prefix) of the SRv6 SID.

The node ID is an ID used to describe a network node.

The function ID is an ID used to describe a local function of a node, and is used to map a local segment endpoint behavior (segment endpoint behavior).

The argument is a related parameter used to describe a function. Currently, the argument is not used in most cases and can be set to 0.

The padding means that if a total length of the foregoing several parts does not reach 128 bits, a plurality of 0s need to be padded to ensure that a length of an entire field is 128 bits.

The block and the node ID form a routable locator. The locator is an IPv6 network segment, and all IPv6 addresses in the network segment can be used as SRv6 SIDs for allocation. After a locator is configured for a network node, locator network segment routing is generated. Another network node can position the node through the locator network segment routing, and can reach, all SIDs advertised by the node through the locator network segment routing.

In another example, it is considered that when a network node has a plurality of locators, the plurality of locators may have corresponding priorities, to facilitate managing and maintaining the locators based on the priorities of the locators. Therefore, when the locator corresponding to the first network node has a priority, a priority of the first locator may be used to identify the first locator, and the first locator may be determined, based on the priority of the first locator, from the plurality of locators corresponding to the first network node. Therefore, the attribute information of the first locator may be the priority of the first locator.

In still another example, it is considered that when a network node has a plurality of locators, the plurality of locators may be associated with flexible algorithms. For example, different locators are associated with different flexible algorithms. Therefore, when the locator corresponding to the first network node is associated with a flexible algorithm, a flexible algorithm associated with the first locator may be used to identify the first locator, and the first locator may be determined, based on the flexible algorithm associated with the first locator, from the plurality of locators corresponding to the first network node. Therefore, the attribute information of the first locator may be the flexible algorithm associated with the first locator.

S103: The controller sends the attribute information of the first locator and the attribute information of the first locator to the first network node.

After obtaining the attribute information of the first locator, the controller may send the attribute information of the first locator to the first network node.

In an example, the controller may send a BGP SR policy message to the first network node, where the BGP SR policy message includes the attribute information of the first locator. In a specific example, in addition to the attribute information of the first locator, the BGP SR policy message may further include the first SR policy. In this case, both the first SR policy and the attribute information of the first locator may be sent to the first network node by using the BGP SR policy message. In this case, in an example, the BGP SR policy message may include a tunnel encapsulation attribute (tunnel encapsulation attribute), and the tunnel encapsulation attribute includes the first SR policy and the attribute information of the first locator.

In an example, the attribute information of the first locator may be carried in an available field (for example, a reserved field) in the BGP SR policy message.

In another example, the BGP SR policy message may include a first TLV, and the first TLV is used to carry the attribute information of the first locator. For example, the tunnel encapsulation attribute includes the first TLV. In this case, the first network node may parse the first TLV to obtain the attribute information of the first locator.

When the attribute information of the first locator is the prefix of the first locator, a structure of the first TLV may be shown in FIG. 3a. FIG. 3a is a diagram of a structure of a first TLV according to an embodiment of this application. As shown in FIG. 3a, the first TLV includes a type field, a length field, an attribute information type field, a locator length (loc-size) field, and a locator field.

The type field indicates that the first TLV is used to carry attribute information of a locator.

The length field indicates a length of a value field (including the loc-size field and the locator field) of the first TLV.

The attribute information type field indicates a type of carried attribute information. The type of the attribute information includes a prefix, a priority, or an associated flexible algorithm.

The loc-size field indicates a length of the first locator, and is in a unit of bits, and a value ranges from 1 to 128.

The locator field is used to carry the prefix of the first locator.

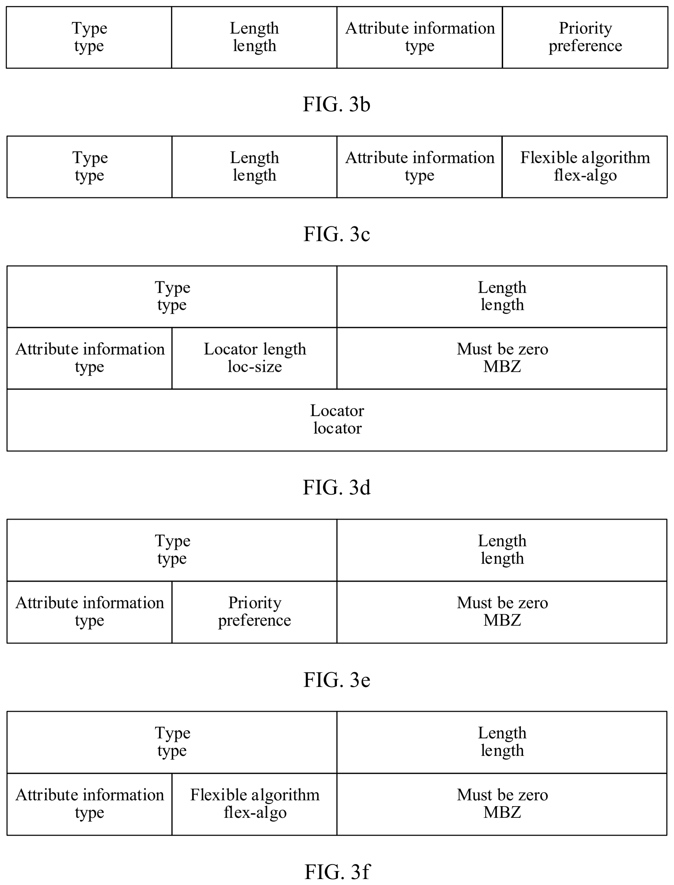

When the attribute information of the first locator is the priority of the first locator, a structure of the first TLV may be shown in FIG. 3b. FIG. 3b is a diagram of a structure of another first TLV according to an embodiment of this application. As shown in FIG. 3b, the first TLV includes a type field, a length field, an attribute information type field, and a priority (preference) field.

The preference field is used to carry the priority of the first locator.

For the type field, the length field, and the attribute information type field, refer to the foregoing descriptions in FIG. 3a. Details are not described herein again.

When the attribute information of the first locator is the flexible algorithm associated with the first locator, a structure of the first TLV may be shown in FIG. 3c. FIG. 3c is a diagram of a structure of another first TLV according to an embodiment of this application. As shown in FIG. 3c, the first TLV includes a type field, a length field, an attribute information type field, and a flexible algorithm (flex-algo) field.

The flex-algo field is used to carry the flexible algorithm associated with the first locator.

For the type field, the length field, and the attribute information type field, refer to the foregoing descriptions in FIG. 3a. Details are not described herein again.

In an example, the controller may send a PCEP message to the first network node, where the PCEP message includes the attribute information of the first locator. In a specific example, in addition to the attribute information of the first locator, the PCEP message may further include the first SR policy. In this case, both the first SR policy and the attribute information of the first locator may be sent to the first network node by using the PCEP message.

In an example, the attribute information of the first locator may be carried in an available field (for example, a reserved field) in the PCEP message.

In another example, the PCEP message may include a second TLV, and the second TLV is used to carry the attribute information of the first locator. In this case, the first network node may parse the second TLV to obtain the attribute information of the first locator.

When the attribute information of the first locator is the prefix of the first locator, a structure of the second TLV may be shown in FIG. 3d. FIG. 3d is a diagram of a structure of a second TLV according to an embodiment of this application. As shown in FIG. 3d, the second TLV includes a type field, a length field, an attribute information type field, a locator length (loc-size) field, a must be zero (must be zero, MBZ) field, and a locator field. A format of the second TLV shown in FIG. 3d is basically the same as a format of the fields included in the first TLV shown in FIG. 3a, and a difference lies in that the second TLV shown in FIG. 3d further includes the MBZ field. Therefore, for the fields of the second TLV shown in FIG. 3d, refer to the foregoing descriptions in FIG. 3a. Details are not described herein again.

When the attribute information of the first locator is the priority of the first locator, a structure of the second TLV may be shown in FIG. 3e. FIG. 3e is a diagram of a structure of another second TLV according to an embodiment of this application. As shown in FIG. 3e, the second TLV includes a type field, a length field, an attribute information type field, a preference field, and an MBZ field.

A format of the second TLV shown in FIG. 3e is basically the same as a format of the fields included in the first TLV shown in FIG. 3b, and a difference lies in that the second TLV shown in FIG. 3e further includes the MBZ field. Therefore, for the fields of the second TLV shown in FIG. 3e, refer to the foregoing descriptions in FIG. 3b. Details are not described herein again.

When the attribute information of the first locator is the flexible algorithm associated with the first locator, a structure of the second TLV may be shown in FIG. 3f. FIG. 3f is a diagram of a structure of another second TLV according to an embodiment of this application. As shown in FIG. 3f, the second TLV includes a type field, a length field, an attribute information type field, a flex-algo field, and an MBZ field. A format of the second TLV shown in FIG. 3f is basically the same as a format of the fields included in the first TLV shown in FIG. 3c, and a difference lies in that the second TLV shown in FIG. 3f further includes the MBZ field. Therefore, for the fields of the second TLV shown in FIG. 3f, refer to the foregoing descriptions in FIG. 3c. Details are not described herein again.

In an example, the controller may send a PCEP message to the first network node, where the PCEP message includes the attribute information of the first locator. In a specific example, in addition to the attribute information of the first locator, the PCEP message may further include the first SR policy. In this case, both the first SR policy and the attribute information of the first locator may be sent to the first network node by using the PCEP message.

S104: The first network node receives the attribute information of the first locator sent by the controller.

S105: The first network node allocates, to the first SR policy based on the attribute information of the first locator, a first BSID belonging to the network segment corresponding to the first locator.

After the controller sends the attribute information of the first locator to the first network node, the first network node may receive the attribute information of the first locator sent by the controller.

In an example, the attribute information of the first locator is used to trigger the first network node to allocate a binding segment identifier BSID to the first SR policy from the network segment corresponding to the first locator. In another example, the attribute information of the first locator indicates a condition that needs to be satisfied by a locator used by the first network node to allocate a BSID to the first SR policy. After receiving the attribute information of the first locator, the first network node may allocate, to the first SR policy based on the attribute information of the first locator, the first BSID belonging to the network segment.

In an example, the first network node may determine the first locator based on the attribute information of the first locator, and further allocate the first BSID to the first SR policy from the network segment corresponding to the first locator.

In a specific example, if the attribute information of the first locator is the prefix of the first locator, the first network node may determine the first locator based on the prefix. For example, the first network node may match a received prefix with prefixes of the plurality of locators corresponding to the first network node, to determine the first locator that matches the received prefix.

In another specific example, if the attribute information of the first locator is the priority of the first locator, the first network node may determine, based on the priority of the first locator, the first locator from the plurality of locators corresponding to the first network node. For example, the first network node may locally store a first mapping relationship between the plurality of locators of the first network node and priorities respectively corresponding to the locators. The first network node may query the first mapping relationship based on the priority of the first locator as an index, to obtain a mapping relationship between the first locator and the priority of the first locator, and further determine the first locator based on the mapping relationship between the first locator and the priority of the first locator.

In still another specific example, if the attribute information of the first locator is the flexible algorithm associated with the first locator, the first network node may determine, based on the flexible algorithm associated with the first locator, the first locator from the plurality of locators corresponding to the first network node. For example, the first network node may locally store a second mapping relationship between the plurality of locators of the first network node and flexible algorithms respectively associated with the locators. The first network node may query the second mapping relationship based on the flexible algorithm associated with the first locator as an index, to obtain a mapping relationship between the first locator and the flexible algorithm associated with the first locator, and further determine the first locator based on the mapping relationship between the first locator and the flexible algorithm associated with the first locator.

It may be learned from the foregoing descriptions that, in the solution in this embodiment of this application, the controller may send, to a head node of an SR policy, attribute information of a locator (that is, the first locator) that is of the first network node and that is used to determine the first SR policy, so that the first network node allocates the BSID to the first SR policy from the network segment corresponding to the first locator, and the locator that is of the first network node and that is used by the controller to determine the first SR policy is consistent with the locator used by the first network node to allocate the BSID to the first SR policy. This facilitates network maintenance. For example, in a scenario in which the second locator of the first network node evolves to the first locator, the controller determines the first SR policy based on the first locator obtained through evolution, and the first network node allocates the BSID to the first SR policy based on the first locator. This facilitates recycling of the second locator.

In an example, after allocating the first BSID to the first SR policy, the first network node may send the first BSID to the controller, so that the controller associates the first BSID with the first SR policy. In an example, the first network node may send the first BSID to the controller by using a BGP LS message. For a carrying position of the first BSID in the BGP LS message, for example, a conventional technology may be used. Details are not described herein again.

In an example, in addition to sending the first BSID to the controller, the first network node may further send the attribute information of the first locator to the controller, so that the controller verifies the first BSID based on the attribute information of the first locator, for example, verifies whether the first BSID belongs to the network segment corresponding to the first locator.

In a specific example, the first BSID and the attribute information of the first locator may be located in a same BGP LS message. In this way, both the first BSID and the attribute information of the first locator may be reported to the controller by using one BGP LS message. In another specific example, the first BSID and the attribute information of the first locator may alternatively be carried in different BGP LS messages. This is not specifically limited in this embodiment of this application.

In an example, the attribute information of the first locator may be carried in a third TLV field in the BGP LS message. A structure of the third TLV field may be the same as the structure of the second TLV or the first TLV. For related content, refer to the foregoing descriptions of the first TLV or the second TLV.

The foregoing describes the information processing method provided in embodiments of this application. The following describes, with reference to the network architecture shown in FIG. 1, a specific application scenario of the information processing method provided in embodiments of this application.
1. New locators are deployed on the PE 1, the P 1, the P 2, and the PE 2.
2. The PE 1, the P 1, the P 2, and the PE 2 advertise new SIDs in the new locators, and the controller obtains the new SIDs advertised by the PE 1, the P 1, the P 2, and the PE 2 in the new locators.
3. The controller uses the new locator to recalculate an SR policy.
4. A stitch path of the recalculated SR policy and attribute information of the new locator of the P 2 are delivered to the cross-domain node P 2.
5. After receiving the new SR Policy, a stitch node allocates, based on the attribute information of the new locator specified by the controller, a BSID 4 to the new SR Policy in a network segment corresponding to the new locator of the P 2, and reports the allocated BSID 4 to the controller through a BGP-LS.
6. After receiving the BSID 4, the controller uses the new BSID 4 as a hop of an end-to-end path across the network domain 100 and the network domain 200.

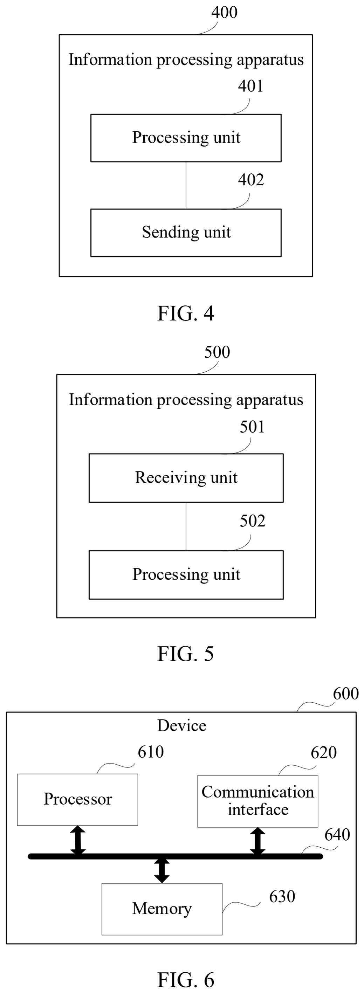

FIG. 4 is a diagram of a structure of an information processing apparatus according to an embodiment of this application. The information processing apparatus 400 shown in FIG. 4 may be used in a controller, and is configured to perform the information processing method that is performed by the controller and that is provided in the foregoing method embodiment.

As shown in FIG. 4, the information processing apparatus 400 includes a processing unit 401 and a sending unit 402.

The processing unit 401 is configured to determine a first segment routing policy SR policy, where the first SR policy includes a first segment identifier SID of a first network node, the first network node is a head node corresponding to the first SR policy, and the first SID belongs to a network segment corresponding to a first locator locator of the first network node; and obtain attribute information of the first locator, where the attribute information indicates the first locator.

The sending unit 402 is configured to send the attribute information of the first locator to the first network node. In an example, the attribute information of the first locator is used to trigger the first network node to allocate a binding segment identifier BSID to the first SR policy from the network segment corresponding to the first locator. In another example, the attribute information of the first locator indicates a condition that needs to be satisfied by a locator used by the first network node to allocate a BSID to the first SR policy.

In a possible implementation, the attribute information of the first locator includes a prefix of the first locator, a priority of the first locator, or a flexible algorithm associated with the first locator.

In a possible implementation, the sending unit 402 is configured to send a border gateway protocol BGP SR policy message to the first network node, where the BGP SR policy message includes the attribute information of the first locator.

In a possible implementation, the BGP SR policy message includes a first type length value TLV, and the first TLV carries the attribute information of the first locator.

In a possible implementation, the sending unit 402 is configured to send a path computation element protocol PCEP message to the first network node, where the PCEP message includes the attribute information of the first locator.

In a possible implementation, the PCEP message includes a second TLV, and the second TLV carries the attribute information of the first locator.

In a possible implementation, the apparatus further includes a receiving unit, configured to receive a first BSID that corresponds to the first SR policy and that is sent by the first network node, where the first BSID belongs to the network segment corresponding to the first locator.

In a possible implementation, the receiving unit is configured to receive the first BSID and the attribute information of the first locator that are sent by the first network node.

In a possible implementation, the receiving unit is configured to receive a BGP link state LS message sent by the first network node, where the BGP LS message includes the first BSID and the attribute information of the first locator.

In a possible implementation, the first locator is determined by the controller.

In a possible implementation, the processing unit 401 is configured to update a second SR policy in response to receiving locator evolution indication information, to obtain the first SR policy, where the locator evolution indication information indicates that a locator of the first network node evolves from a second locator to the first locator, the second SR policy includes a second SID of the first network node, the first network node is a head node corresponding to the second SR policy, and the second SID belongs to a network segment corresponding to the second locator.

FIG. 5 is a diagram of a structure of another information processing apparatus according to an embodiment of this application. The information processing apparatus 500 shown in FIG. 5 may be used in a first network node, and is configured to perform the information processing method that is performed by the first network node and that is provided in the foregoing method embodiment.

As shown in FIG. 5, the information processing apparatus 500 includes a receiving unit 501 and a processing unit 502.

The receiving unit 501 is configured to receive attribute information of a first locator sent by a controller, where the attribute information indicates the first locator, and the first locator is a locator of the first network node. In an example, the attribute information of the first locator is used to trigger the first network node to allocate a binding segment identifier BSID to a first SR policy from a network segment corresponding to the first locator. In another example, the attribute information of the first locator indicates a condition that needs to be satisfied by a locator used by the first network node to allocate a BSID to the first SR policy. The first SR policy includes a first segment identifier SID of the first network node, the first SID belongs to the network segment, and the first network node is a head node corresponding to the first SR policy.

The processing unit 502 is configured to allocate, to the first SR policy based on the attribute information of the first locator, a first BSID belonging to the network segment.

In a possible implementation, the attribute information of the first locator includes a prefix of the first locator, a priority of the first locator, or a flexible algorithm associated with the first locator.

In a possible implementation, the receiving unit 501 is configured to receive a border gateway protocol BGP SR policy message sent by the controller, where the BGP SR policy message includes the attribute information of the first locator.

In a possible implementation, the BGP SR policy message includes a first type length value TLV, and the first TLV carries the attribute information of the first locator.

In a possible implementation, the receiving unit 501 is configured to receive a path computation element protocol PCEP message sent by the controller, where the PCEP message includes the attribute information of the first locator.

In a possible implementation, the PCEP message includes a second TLV, and the second TLV carries the attribute information of the first locator.

In a possible implementation, the processing unit 502 is configured to determine the first locator based on the prefix of the first locator; and allocate the first BSID to the first SR policy from the network segment corresponding to the first locator.

In a possible implementation, the processing unit 502 is configured to determine, based on the priority of the first locator, the first locator from a plurality of locators corresponding to the first network node; and allocate the first BSID to the first SR policy from the network segment corresponding to the first locator.

In a possible implementation, the processing unit 502 is configured to determine, based on the flexible algorithm associated with the first locator, the first locator from a plurality of locators corresponding to the first network node; and allocate the first BSID to the first SR policy from the network segment corresponding to the first locator.

In a possible implementation, the apparatus further includes a sending unit, configured to send the first BSID to the controller.

In a possible implementation, the sending unit is configured to send the first BSID and the attribute information of the first locator to the controller.

In a possible implementation, the sending unit is configured to send a BGP link state LS message to the controller, where the BGP LS message includes the first BSID and the attribute information of the first locator.

It should be noted that hardware structures of the information processing apparatuses 400 and 500 mentioned above may be a structure shown in FIG. 6. FIG. 6 is a diagram of a structure of a device according to an embodiment of this application.

Refer to FIG. 6. The device 600 includes a processor 610, a communication interface 620, and a memory 630. The device 600 may include one or more processors 610. In FIG. 6, one processor is used as an example. In this embodiment of this application, the processor 610, the communication interface 620, and the memory 630 may be connected through a bus system or in another manner. In FIG. 6, an example in which the processor 610, the communication interface 620, and the memory 630 are connected through a bus system 640 is used.

The processor 610 may be a central processing unit (central processing unit, CPU), a network processor (network processor, NP), or a combination of a CPU and an NP. The processor 610 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The memory 630 may include a volatile memory (English: volatile memory), for example, a random access memory (random access memory, RAM). The memory 630 may alternatively include a non-volatile memory (English: non-volatile memory), for example, a flash memory (English: flash memory), a hard disk drive (hard disk drive, HDD), or a solid-state drive (solid-state drive, SSD). The memory 630 may further include a combination of the foregoing types of memories. For example, the memory 630 may store a first SR policy.

Optionally, the memory 630 stores an operating system and a program, an executable module, a data structure, a subset thereof, or an extended set thereof. The program may include various operation instructions for implementing various operations. The operating system may include various system programs, to implement various basic services and process a hardware-based task. The processor 610 may read a program in the memory 630, to implement the information processing method provided in embodiments of this application.

The bus system 640 may be a peripheral component interconnect (peripheral component interconnect, PCI) bus, an extended industry standard architecture (extended industry standard architecture, EISA) bus, or the like. The bus system 640 may be classified into an address bus, a data bus, a control bus, and the like. For ease of representation, only one thick line is used to represent the bus in FIG. 6, but this does not mean that there is only one bus or only one type of bus.

An embodiment of this application further provides a computer-readable storage medium, including instructions or a computer program. When the instructions or the computer program is run on a computer, the computer is enabled to perform the information processing method provided in the foregoing embodiments.

An embodiment of this application further provides a computer program product including instructions or a computer program. When the instructions or the computer program is run on a computer, the computer is enabled to perform the information processing method provided in the foregoing embodiments.

In the specification, claims, and accompanying drawings of this application, the terms "first", "second", "third", "fourth", and on the like (if existent) are intended to distinguish between similar objects but do not necessarily indicate a specific order or sequence. It should be understood that data used in such a way are interchangeable in proper cases, so that embodiments described herein can be implemented in an order other than the order illustrated or described herein. In addition, the terms "include" and "have" and any other variants are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In the several embodiments provided in this application, it should be understood that the disclosed system, apparatus, and method may be implemented in other manners. For example, the described apparatus embodiments are merely examples. For example, division into units is merely logical service division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units are integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, the technical solutions of this application essentially, a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that may store program code, such as a USB flash drive, a removable hard disk drive, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium. The communication medium includes any medium that enables a computer program to be transmitted from one place to another. The storage medium may be any available medium accessible to a general-purpose or dedicated computer.

The objectives, technical solutions, and beneficial effects of the present invention have been further described in detail in the foregoing specific implementations. It should be understood that the foregoing descriptions are merely specific implementations of the present invention.

In conclusion, the foregoing embodiments are merely intended for describing the technical solutions of this application instead of limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the scope of the technical solutions in embodiments of this application.

## Claims

1. An information processing method, applied to a controller, wherein the method comprises:
determining a first segment routing policy SR policy, wherein the first SR policy comprises a first segment identifier SID of a first network node, the first network node is a head node corresponding to the first SR policy, and the first SID belongs to a network segment corresponding to a first locator locator of the first network node;
obtaining attribute information of the first locator, wherein the attribute information indicates the first locator; and
sending the attribute information of the first locator to the first network node, wherein the attribute information of the first locator is used to trigger the first network node to allocate a binding segment identifier BSID to the first SR policy from the network segment corresponding to the first locator.

2. The method according to claim 1, wherein the attribute information of the first locator comprises:
a prefix of the first locator, a priority of the first locator, or a flexible algorithm associated with the first locator.

3. The method according to claim 1 or 2, wherein the sending the attribute information of the first locator to the first network node comprises:
sending a border gateway protocol BGP SR policy message to the first network node, wherein the BGP SR policy message comprises the attribute information of the first locator.

4. The method according to claim 3, wherein the BGP SR policy message comprises a first type length value TLV, and the first TLV carries the attribute information of the first locator.

5. The method according to claim 1 or 2, wherein the sending the attribute information of the first locator to the first network node comprises:
sending a path computation element protocol PCEP message to the first network node, wherein the PCEP message comprises the attribute information of the first locator.

6. The method according to claim 5, wherein the PCEP message comprises a second TLV, and the second TLV carries the attribute information of the first locator.

7. The method according to any one of claims 1 to 6, wherein the method further comprises:
receiving a first BSID that corresponds to the first SR policy and that is sent by the first network node, wherein the first BSID belongs to the network segment corresponding to the first locator.

8. The method according to claim 7, wherein the receiving the first BSID that corresponds to the first SR policy and that is sent by the first network node comprises:
receiving the first BSID and the attribute information of the first locator that are sent by the first network node.

9. The method according to claim 8, wherein the receiving the first BSID and the attribute information of the first locator that are sent by the first network node comprises:
receiving a BGP link state LS message sent by the first network node, wherein the BGP LS message comprises the first BSID and the attribute information of the first locator.

10. The method according to any one of claims 1 to 9, wherein the first locator is determined by the controller.

11. The method according to any one of claims 1 to 10, wherein the determining the first segment routing policy SR policy comprises:
updating a second SR policy in response to receiving locator evolution indication information, to obtain the first SR policy, wherein
the locator evolution indication information indicates that a locator of the first network node evolves from a second locator to the first locator, the second SR policy comprises a second SID of the first network node, the first network node is a head node corresponding to the second SR policy, and the second SID belongs to a network segment corresponding to the second locator.

12. An information processing method, applied to a first network node, wherein the method comprises:
receiving attribute information of a first locator sent by a controller, wherein the attribute information indicates the first locator, the first locator is a locator of the first network node, the attribute information of the first locator is used to trigger the first network node to allocate a binding segment identifier BSID to a first segment routing policy SR policy from a network segment corresponding to the first locator, the first SR policy comprises a first segment identifier SID of the first network node, the first SID belongs to the network segment, and the first network node is a head node corresponding to the first SR policy; and
allocating, to the first SR policy based on the attribute information of the first locator, a first BSID belonging to the network segment.

13. The method according to claim 12, wherein the attribute information of the first locator comprises:
a prefix of the first locator, a priority of the first locator, or a flexible algorithm associated with the first locator.

14. The method according to claim 12 or 13, wherein the receiving the attribute information of the first locator sent by the controller comprises:
receiving a border gateway protocol BGP SR policy message sent by the controller, wherein the BGP SR policy message comprises the attribute information of the first locator.

15. The method according to claim 14, wherein the BGP SR policy message comprises a first type length value TLV, and the first TLV carries the attribute information of the first locator.

16. The method according to claim 12 or 13, wherein the receiving the attribute information of the first locator sent by the controller comprises:
receiving a path computation element protocol PCEP message sent by the controller, wherein the PCEP message comprises the attribute information of the first locator.

17. The method according to claim 16, wherein the PCEP message comprises a second TLV, and the second TLV carries the attribute information of the first locator.

18. The method according to claim 13, wherein the allocating, to the first SR policy based on the attribute information of the first locator, the first BSID belonging to the network segment comprises:
determining the first locator based on the prefix of the first locator; and
allocating the first BSID to the first SR policy from the network segment corresponding to the first locator.

19. The method according to claim 13, wherein the allocating, to the first SR policy based on the attribute information of the first locator, the first BSID belonging to the network segment comprises:
determining, based on the priority of the first locator, the first locator from a plurality of locators corresponding to the first network node; and
allocating the first BSID to the first SR policy from the network segment corresponding to the first locator.

20. The method according to claim 13, wherein the allocating, to the first SR policy based on the attribute information of the first locator, the first BSID belonging to the network segment comprises:
determining, based on the flexible algorithm associated with the first locator, the first locator from a plurality of locators corresponding to the first network node; and
allocating the first BSID to the first SR policy from the network segment corresponding to the first locator.

21. The method according to any one of claims 12 to 20, wherein the method further comprises:
sending the first BSID to the controller.

22. The method according to claim 21, wherein the sending the first BSID to the controller comprises:
sending the first BSID and the attribute information of the first locator to the controller.

23. The method according to claim 22, wherein the sending the first BSID and the attribute information of the first locator to the controller comprises:
sending a BGP link state LS message to the controller, wherein the BGP LS message comprises the first BSID and the attribute information of the first locator.

24. An information processing apparatus, used in a controller, wherein the apparatus comprises:
a processing unit, configured to determine a first segment routing policy SR policy, wherein the first SR policy comprises a first segment identifier SID of a first network node, the first network node is a head node corresponding to the first SR policy, and the first SID belongs to a network segment corresponding to a first locator locator of the first network node; and obtain attribute information of the first locator, wherein the attribute information indicates the first locator; and
a sending unit, configured to send the attribute information of the first locator to the first network node, wherein the attribute information of the first locator is used to trigger the first network node to allocate a binding segment identifier BSID to the first SR policy from the network segment corresponding to the first locator.

25. An information processing apparatus, used in a first network node, wherein the apparatus comprises:
a receiving unit, configured to receive attribute information of a first locator sent by a controller, wherein the attribute information indicates the first locator, the first locator is a locator of the first network node, the attribute information of the first locator is used to trigger the first network node to allocate a binding segment identifier BSID to a first segment routing policy SR policy from a network segment corresponding to the first locator, the first SR policy comprises a first segment identifier SID of the first network node, the first SID belongs to the network segment, and the first network node is a head node corresponding to the first SR policy; and
a processing unit, configured to allocate, to the first SR policy based on the attribute information of the first locator, a first BSID belonging to the network segment.

26. A device, comprising a processor and a memory, wherein
the memory is configured to store instructions or a computer program; and
the processor is configured to execute the instructions or the computer program to perform the method according to any one of claims 1 to 23.

27. A computer-readable storage medium, comprising instructions or a computer program, wherein when the instructions or the computer program is run on a computer, the computer is enabled to perform the method according to any one of claims 1 to 23.

28. A communication system, wherein the system comprises:
a controller that performs the method according to any one of claims 1 to 11 and a first network node that performs the method according to any one of claims 12 to 23.

29. A computer program product, comprising a computer program, wherein when the computer program is run on a processor, the method according to any one of claims 1 to 23 is performed.
